# FASCICULE DE BREVET EUROPEEN

(11) **EP 2 964 500 B1**
(45) Date de publication et mention de la délivrance du brevet: **05.07.2017**
(21) Numéro de dépôt: 14713200.5
(22) Date de dépôt: 28.02.2014
(51) Int. Cl.: B60T 17/02, B60T 13/52

(54) **PROCÉDÉ ET DISPOSITIF DE CONTROLE DE DÉPRESSION D'ASSISTANCE DE SERVOFREIN**
VERFAHREN UND VORRICHTUNG ZUR STEUERUNG EINES BREMSKRAFTVERSTÄRKER-UNTERSTÜTZUNGSVAKUUMS
METHOD AND DEVICE FOR CONTROLLING A BRAKE BOOSTER ASSISTANCE VACUUM

(30) Priorité: 05.03.2013 FR 1351923
(43) Date de publication de la demande: 13.01.2016
(73) Titulaire: Renault S.A.S., 92100 Boulogne-Billancourt (FR)
(72) Inventeur: GODLEWSKI, Nicolas, 78280 Guyancourt (FR)
(86) Numéro de dépôt international: PCT/FR2014/050447
(87) Numéro de publication internationale: WO 2014/135773

(56) Documents cités:
- EP-A1- 2 040 967
- WO-A1-93/11983

## Description

L'invention concerne un procédé et un dispositif de contrôle d'une dépression d'assistance de servofrein permettant de faire fonctionner une pompe à vide pour augmenter la dépression lorsqu'elle est inférieure à un seuil bas et d'arrêter la pompe à vide lorsque la dépression est supérieure à un seuil haut ou lorsqu'une durée de fonctionnement de la pompe à vide dépasse un durée limite haute.

Le document EP2040967 divulgue par exemple un procédé et un dispositif de ce type. Ce document illustre l'état antérieur de la technique qui s'attache essentiellement à adapter les valeurs de seuils haut et bas aux conditions internes de fonctionnement du véhicule comme par exemple ici la vitesse. L'adaptation des valeurs de seuils haut et bas aux conditions internes de fonctionnement du véhicule est facilitée par la maîtrise généralement acquise du véhicule.

Cependant les procédés et dispositifs antérieurement connus ne permettent pas prendre en compte de manière simple et efficace, des conditions externes indépendantes du fonctionnement du véhicule comme par exemple une baisse de pression atmosphérique, notamment lorsque le véhicule monte en altitude.

.Pour remédier aux inconvénients de l'état antérieur de la technique, l'invention a pour objet un procédé de contrôle d'une dépression d'assistance de servofrein ajoutant à des étapes consistant à exécuter des actions comparables à celles de procédés déjà connus, au moins une étape consistant à diminuer le seuil haut lorsque la durée quantifiée de fonctionnement de la pompe à vide est supérieure ou égale à une durée limite haute.

Dans une mise en oeuvre particulière du procédé, le seuil haut est diminué en soustrayant du seuil haut, une quantité inférieure à la différence entre seuil haut et le seuil bas.

De préférence, le procédé comprend une étape consistant à augmenter le seuil haut lorsque la durée quantifiée de fonctionnement de la pompe à vide est inférieure ou égale à une durée limite basse inférieure à la durée limite haute.

Plus particulièrement, le seuil haut est augmenté en additionnant au seuil haut, une quantité inférieure à la différence entre seuil haut et le seuil bas.

Avantageusement, la durée limite basse correspond à une constante de temps de mise en dépression maximale possible d'un réservoir d'accumulation de dépression.

Particulièrement, la durée quantifiée de fonctionnement de la pompe à vide est initialisée à zéro lorsque la dépression passe en dessous du seuil bas.

Plus particulièrement, la durée quantifiée de fonctionnement de la pompe à vide est initialisée à zéro lors d'un actionnement des freins.

L'invention a aussi pour objet un programme d'ordinateur comprenant des instructions de code de programme pour l'exécution des étapes d'un procédé conforme à l'invention lorsque le programme est exécuté sur un ordinateur.

L'invention a encore pour objet un dispositif de contrôle d'une dépression d'assistance de servofrein, comprenant un capteur de dépression pour mesurer ladite dépression et une pompe à vide pour augmenter ladite dépression lorsque celle-ci baisse, dans lequel une unité électronique qui est connectée au capteur de dépression et à la pompe à vide, comporte un programme d'ordinateur pour l'exécution au moins des étapes du procédé selon l'invention.

Plus particulièrement, le dispositif comprend un détecteur d'actionnement des freins auquel l'unité électronique est connectée.

D'autres caractéristiques et avantages de l'invention apparaitront au cours de la lecture de la description détaillée qui va suivre pour la compréhension de laquelle on se reportera aux dessins annexés parmi lesquels :
- la figure 1 est un schéma qui représente un véhicule automobile à moteur à combustion équipé d'un dispositif de freinage comportant un servofrein à dépression ;
- la figure 2 montre des étapes habituelles de procédé de contrôle de la dépression ;
- la figure 3 est un tableau qui montre la variation de la pression atmosphérique avec l'élévation en altitude et la dépression maximale possible qui en résulte ;
- la figure 4 montre des étapes de procédé de contrôle de la dépression conforme à l'invention.

Dans la suite de la description, des éléments présentant une structure identique ou des fonctions analogues seront désignés par un même numéro de référence.

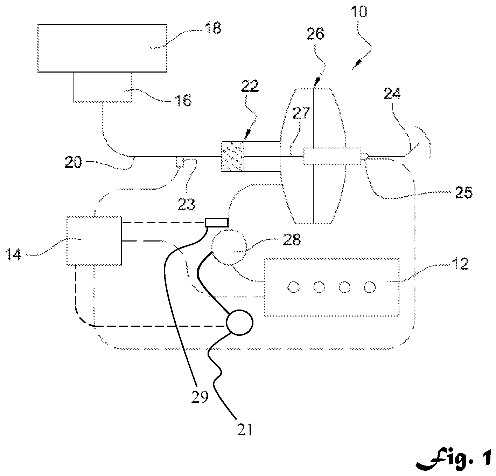

On a représenté schématiquement à la figure 1 un véhicule automobile 10 tracté ou propulsé par un moteur 12. Le moteur représenté sur la figure 1 est un moteur à combustion interne à titre purement illustratif et non limitatif. On comprendra que l'invention reste valable pour un moteur d'entraînement électrique. Le moteur 12 est piloté par une unité 14 électronique de commande.

Le véhicule 10 comporte aussi des moyens de freinage du véhicule. Les moyens de freinage comportent ici plusieurs dispositifs 16 de freinage dont chacun est associé à une roue 18 du véhicule 10. Pour simplifier les dessins seuls une roue 18 et le dispositif 16 de freinage associé ont été représentés.

Le dispositif 16 de freinage est par exemple formé par un frein à disque qui comporte des plaquettes de frein (non représentées) généralement portées par un étrier fixe à l'intérieur duquel elles sont susceptibles d'être déplacées entre une position de repos dans laquelle elles sont écartées d'un disque de frein (non représenté) et une position de serrage du disque de frein solidaire en rotation de la roue 18.

Le dispositif 16 de freinage est commandé entre sa position de repos et sa position de serrage par une pression "Pmc" d'un fluide de freinage qui est contenu dans un circuit 20 hydraulique. De manière connue, le fluide de freinage est ici un liquide incompressible.

La pression "Pmc" du fluide de freinage est générée par un maître-cylindre 22. De manière simplifiée, le maître-cylindre 22 agit comme un piston qui est susceptible d'être déplacé entre une position de repos et une position de compression du fluide de freinage contenu dans le circuit 20 hydraulique.

Par mesure de sécurité, le circuit 20 hydraulique peut comporter un capteur 23 de pression qui est agencé de manière à mesurer à tout instant la pression "Pmc" du fluide de freinage. Cette pression sera par la suite appelée "pression de freinage Pmc". Le capteur 23 lorsqu'il existe, peut envoyer un signal représentatif de la pression de freinage "Pmc" à destination de l'unité 14 électronique de pilotage du moteur.

Une tige 27 de poussée du piston du maître-cylindre 22 est susceptible d'être poussée par le conducteur du véhicule 10 par l'intermédiaire d'un organe 24 d'actionnement. L'organe 24 d'actionnement est ici une pédale de freinage qui est mobile entre une position de repos vers laquelle elle est rappelée élastiquement, et une position extrême d'actionnement dans laquelle la pression "Pmc" du fluide de freinage augmente pour actionner le dispositif 16 de freinage vers sa position de freinage.

Cependant, la pression "Pmc" de freinage requise pour que le dispositif 16 de freinage freine efficacement le véhicule 10 nécessite un effort très élevé sur la tige 27 de poussée du maître-cylindre 22.

Aussi, pour assister le conducteur, il est connu d'interposer un servofrein 26 à dépression entre l'organe 24 d'actionnement et le maître-cylindre 22 afin d'amplifier l'effort de l'organe 24 d'actionnement au moyen d'une dépression fournie par le moteur 12 en fonctionnement lorsque le moteur 12 est un moteur thermique ou d'autre manière. Notamment la dépression du servofrein 26 est avantageusement maintenue par une pompe à vide 21 qui est pilotée par l'unité 14 électronique ou par une autre unité électronique. La pompe à vide 21 est particulièrement utile lorsque le moteur 12 est un moteur d'entraînement électrique qui ne crée pas naturellement de dépression comme c'est le cas pour un moteur thermique. La pompe à vide 21 est aussi utile lorsque le moteur 12 est un moteur thermique pour suppléer à une insuffisance de dépression générée par le moteur thermique, notamment lorsque le moteur thermique est à l'arrêt. La pompe à vide 21 est pilotée par son unité électronique de pilotage en cherchant à maintenir la dépression dans le servofrein 26 en valeur absolue au dessus d'une valeur minimale de dépression d'assistance "Pass_min". On peut aussi prévoir un réservoir 28 d'accumulation de vide mais, lorsque la capacité du servofrein est suffisante pour faire office d'accumulateur, il est préférable de se passer de réservoir 28 afin de réduire l'encombrement et les raccords supplémentaires que ce réservoir nécessiterait.

Nous ne reviendrons pas sur le principe de fonctionnement du servofrein 26 déjà connu par ailleurs.

Un capteur de dépression 29 connecté à l'unité 14 électronique, mesure une différence entre la pression atmosphérique et la pression à l'intérieur du servofrein 26.

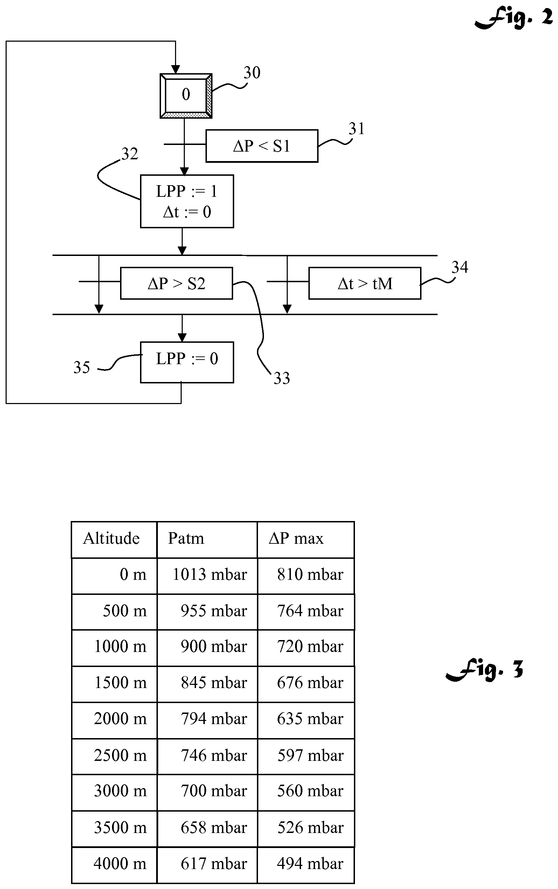

La figure 2 montre des étapes habituelles de procédé de contrôle d'une dépression ΔP d'assistance du servofrein 26.

Tant que la dépression ΔP est suffisante, le procédé au repos est dans une étape initiale 30 de veille.

Une transition 31 est validée lorsque la dépression ΔP est inférieure à un seuil bas S1. La dépression ΔP, typiquement mesurée par le capteur de dépression 29, représente une différence de pression entre une pression régnant en partie avale du servofrein 26 et la pression atmosphérique régnant à l'extérieur du servofrein. Ainsi, la pression atmosphérique régnant en partie amont du servofrein 26 crée un effort égal à la valeur mesurée positivement de la dépression ΔP multipliée par la section du servofrein qui vient s'ajouter à l'effort produit par exemple par une pression du pied sur la pédale de frein 24. Le seuil bas S1 correspond à une valeur en deçà de laquelle la dépression ΔP n'est plus suffisante pour assurer un effort sécuritaire de freinage. Bien entendu, le seuil bas dépend de la section efficace du servofrein. A titre d'exemple purement illustratif, on peut rencontrer dans la littérature la valeur de 0,6 bar qui correspond à une pression absolue de 0,4 bar pour une pression atmosphérique de 1 bar.

Une validation de la transition 31 à la suite de l'étape 30, active une étape 32 qui consiste à faire fonctionner la pompe à vide 21 de façon à augmenter la dépression ΔP mise à disposition du servofrein 26. La mise en route de la pompe à vide se fait par exemple par mise à 1 d'un signal logique LPP qui provoque une connexion du moteur de la pompe à la batterie du véhicule.

Dans l'étape 32, une initialisation de temporisation Δt à zéro, permet de quantifier une durée de fonctionnement de la pompe à vide qui suit son démarrage. Comme nous le verrons par la suite, la durée quantifiée n'est pas nécessairement la durée effective de fonctionnement de la pompe à vide.

Une transition 33 est validée lorsque la dépression ΔP est supérieure ou égale à un seuil haut S2. A titre d'exemple purement illustratif, on peut rencontrer dans la littérature la valeur de 0,8 bar qui correspond à une pression absolue de 0,2 bar pour une pression atmosphérique de 1 bar.

Une validation de la transition 33 à la suite de l'étape 30, active une étape 35 qui consiste à arrêter la pompe à vide 21, la dépression accumulée dans le servofrein 26 étant alors estimée suffisante pour fournir une bonne assistance à l'effort de freinage.

De façon à ne pas faire fonctionner la pompe à vide trop longtemps en cas de difficulté à atteindre le seuil haut S2, une transition 34 est validée par mesure de sécurité lorsque la durée quantifiée de fonctionnement Δt de la pompe à vide dépasse un durée limite haute tM.

Une validation de la transition 34 à la suite de l'étape 30, active aussi l'étape 35 de façon à arrêter la pompe à vide 21, même si la dépression accumulée dans le servofrein 26 n'a pas atteint le seuil attendu qui aurait validé la transition 33.

La durée limite haute tM doit être posée de façon suffisamment élevée, notamment pour tenir compte d'actions de freinage qui ont naturellement tendance à faire baisser la dépression ΔP disponible dans le servofrein, en d'autres termes à faire remonter la pression absolue dans le servofrein 26. La durée limite haute tM doit être posée de façon suffisamment élevée, aussi pour tenir compte d'autres facteurs comme par exemple une baisse de pression atmosphérique qui a naturellement tendance à diminuer la valeur de dépression, mesurée par nature relativement à la pression atmosphérique. A titre purement illustratif, la valeur de la durée limite haute tM est par exemple fixée à douze ou quinze secondes. De manière plus générale, la valeur de la durée limite haute tM est fixée de façon à autoriser un fonctionnement de la pompe à vide au-delà du temps nécessaire pour atteindre le seuil haut S2 de dépression dans le servofrein 26.

Le procédé de la figure 1 pose un problème lorsque l'environnement du véhicule est soumis à des baisses de pression atmosphérique conséquentes, notamment lorsque le véhicule évolue en altitude.

On peut noter par exemple sur le tableau de la figure 3, une pression atmosphérique qui vaut 1013 mbar au niveau de la mer à 0 m d'altitude, ne vaudra plus que 900 mbar à 1000 m d'altitude et seulement 746 mbar à 2500 m d'altitude. Ainsi, la dépression ΔP de valeur 810 mbar qu'il est possible d'obtenir à 0 m d'altitude baisse au fur et à mesure qu'on s'élève en altitude pour ne plus représenter que 494 mbar à 4000 m d'altitude. Or, de nombreuses régions du monde possèdent des voies de circulation en altitude élevée.

On voit que la valeur évoquée ci-dessus du seuil S2 à 800 mbar ne peut plus être atteinte dès 500 m d'altitude. C'est alors systématiquement la transition 34 qui active l'étape 35 d'arrêt de la pompe à vide dès 200 m d'altitude. La pompe travaillant constamment pendant la durée maximale tM, risque alors une fatigue prématurée diminuant sa durée de vie, outre la consommation énergétique qui en résulte. Or ce travail supplémentaire qui augmente avec l'altitude, pour tenter de dépasser la dépression maximale ΔP que la pression atmosphérique permet d'atteindre, est inutile car sans effet pour atteindre le seuil fixé.

Une solution pourrait être celle de fixer une valeur plus basse du seuil S2 pour satisfaire les conditions de fonctionnement à l'altitude maximale sur un territoire donné. Cette solution brutale consistant à se référer à la valeur la plus basse pour le seuil S2, ne serait pas satisfaisante car elle priverait le servofrein du maximum de dépression qu'il est possible d'obtenir lorsque le véhicule circulerait à une altitude plus basse.

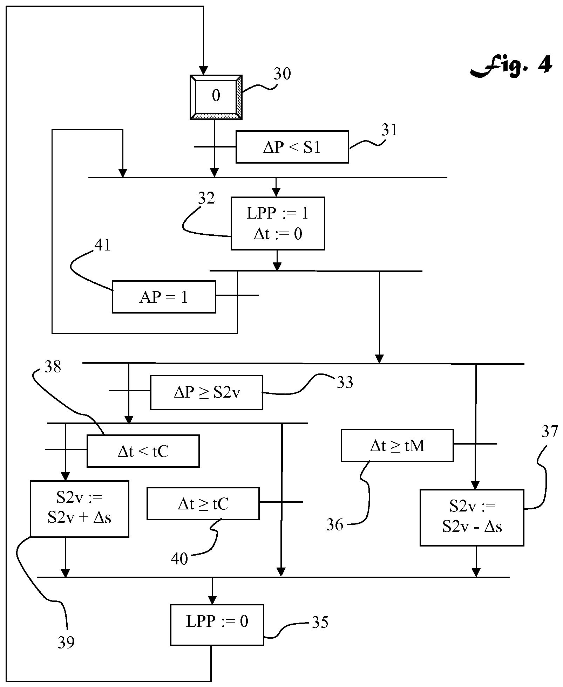

De façon à pouvoir tenir compte d'une baisse de pression atmosphérique, notamment lorsque le véhicule monte en altitude, le procédé expliqué à présent en référence à la figure 4, remplace le seuil haut fixe S2 par un seuil haut variable S2v pour valider la transition 33.

Différentes méthodes pourraient être mises en oeuvre pour prendre en compte une baisse de pression atmosphérique comme par exemple un capteur de pression absolue extérieure au véhicule ou une estimation de l'altitude par d'autres moyens.

Le procédé de l'invention a le mérite de ne nécessiter aucun capteur supplémentaire et aucun recours à des données extérieures supplémentaires.

Une transition 36 validée lorsque la durée quantifiée de fonctionnement Δt de la pompe à vide est supérieure ou égale à la durée limite haute tM, active maintenant non seulement l'étape 35 d'arrêt de la pompe à vide mais aussi une étape 37 consistant à diminuer le seuil haut S2v lorsque la durée limite haute tM est atteinte.

Il est possible de prendre une valeur initiale du seuil haut S2v, égale à la valeur fixe S2 précédemment mentionnée.

Ici encore, différentes méthodes peuvent être utilisées pour diminuer le seuil haut S2v, comme par exemple celle de positionner le seuil haut S2v à la dernière valeur atteinte ou à une moyenne de quelques échantillons mémorisés de dernières valeurs atteintes par la dépression ΔP au moment de la validation de la transition 37. Bien que possible, une telle méthode présente l'inconvénient d'être sensible aux événements perturbateurs contre lesquels il convient de se prémunir.

Une méthode plus robuste consiste à diminuer le seuil haut S2v dans l'étape 37 en soustrayant du seuil haut S2v, une quantité Δs inférieure à la différence entre le seuil haut S2v et le seuil bas S1. Cette précaution permet d'éviter un croisement des seuils hauts et bas. Il est possible de donner à la quantité Δs, une valeur égale à un pourcentage de la différence entre le seuil haut S2v et le seuil bas S1. Il est aussi possible de donner à la quantité Δs, une valeur soit égale à un pourcentage fixe de la différence entre le seuil haut S2 maximal et le seuil bas S1 correspondant, soit une valeur nulle au cas où la quantité Δs ne serait plus inférieure à la différence entre le seuil haut S2v et le seuil bas S1 par suite d'une diminution trop forte du seuil S2v.

La quantité Δs soustraite au seuil haut S2v à chaque validation de la transition 36 fait converger progressivement le seuil haut S2v vers une valeur suffisamment basse pour valider la transition 33 sans valider la transition 36, en d'autres termes pour détecter une dépression supérieure au seuil haut S2v avant d'atteindre la durée tM.

La figure 4 qui montre toutes les améliorations possibles du procédé conforme à l'invention tel qu'il vient d'être exposé, présente d'autres transitions et étapes dont l'absence n'empêche pas la mise en fonctionnement de la pompe à vide dans l'étape 32 suivie de son arrêt dans l'étape 35.

Une transition 38 validée à la suite de la transition 33 lorsque la durée quantifiée Δt est inférieure à une durée limite basse tC. La durée limite basse tC est prédéterminée suffisamment inférieure à la durée tM pour indiquer que le seuil S2v pourrait être augmenté sans provoquer a priori de validation de la transition 36 à la prochaine mise en fonctionnement de la pompe à vide en étape 32. C'est notamment le cas lorsque le véhicule évolue de façon à baisser son altitude avec pour effet d'augmenter la pression atmosphérique.

Une validation de la transition 38 active alors une étape 39 consistant à augmenter le seuil haut S2v. Ici encore, l'augmentation du seuil haut S2v peut se faire de manière semblable à la diminution en utilisant des méthodes duales de celles mentionnées ci-dessus.

Notamment, le seuil haut S2v est augmenté en additionnant au seuil haut S2v, la quantité Δs précédemment mentionnée.

De préférence mais non nécessairement, la durée limite basse tC correspond à une constante de temps de mise en dépression maximale possible du servofrein 26.

Ainsi, une succession d'activations des étapes 37 et 39 a pour effet de faire converger le seuil haut S2v vers une valeur proche de la dépression maximale qu'il est possible d'atteindre en fonction des conditions atmosphériques de l'environnement dans lequel évolue le véhicule.

La transition 40, validée à la suite de la transition 33 lorsque la durée quantifiée de fonctionnement Δt de la pompe à vide, est supérieure à la durée tC, est complémentaire de la transition 38 de façon à assurer l'activation de l'étape 35 à la suite de la transition 33 quelque soit la durée de fonctionnement de la pompe.

On rappelle que la durée quantifiée de fonctionnement Δt de la pompe à vide est initialisée dans l'étape 32 à zéro lorsque la dépression ΔP passe en dessous du seuil bas S1.

Comme pour le seuil haut S2v, on peut prévoir de faire varier le seuil bas S1 dans les étapes 37 et 39 de façon, par exemple, à garder un écart constant de 200 mbar entre les deux seuils. Dans ce cas, il convient bien entendu de s'assurer que le seuil bas S1 ne descend pas en dessous d'une valeur incompatible avec les principes de base que l'homme du métier saura justement apprécier.

Une transition 41 est activée lors d'un actionnement AP des freins détecté par exemple par un capteur 25 de déplacement sur la pédale de frein ou d'un capteur 23 de pression sur les conduites 20 d'amenée du fluide aux freins, notamment en cas de fonctionnement du véhicule en mode autonome ou pour tenir compte de divers régulations ESP, ABS ou autres.

Chaque validation de la transition 41 reboucle sur l'étape 32 de façon à initialiser à zéro la durée quantifiée de fonctionnement Δt de la pompe à vide qui est ainsi inférieure à la durée réelle de fonctionnement de la pompe à vide mais qui est la durée prise en compte pour les validations de transition 36, 38, 40 de façon à tenir compte des perturbations provoquées par le freinage sur le rechargement en vide du servofrein 26 qui joue le rôle d'accumulateur de vide.

Le procédé exposé ci-dessus est avantageusement codé sous forme de programme d'ordinateur comprenant des instructions de code de programme pour l'exécution de tout ou partie des étapes illustrée par la figure 4 lorsque le programme est exécuté sur un ordinateur. Le terme ordinateur désigne bien entendu ici toute unité électronique programmable comme par exemple un calculateur embarqué.

Ainsi, dans le dispositif reconnaissable sur la figure 1 pour contrôler la dépression ΔP d'assistance du servofrein 26, à l'aide du capteur de dépression 29 qui mesure la dépression ΔP et de la pompe à vide 21 qui augmente la dépression ΔP lorsque la dépression ΔP baisse, l'unité électronique 14 connectée au capteur de dépression 29 et à la pompe à vide 21, contient installé en mémoire le programme d'ordinateur ci-dessus de manière à exécuter automatiquement tout ou partie des étapes du procédé selon l'invention.

Le capteur 25 de déplacement de la pédale de frein, le capteur 23 de pression de la conduite 20 ou tout autre détecteur d'actionnement des freins connecté à l'unité électronique 14 permet de faire fonctionner la pompe pendant une durée suffisante à assurer le freinage tout en contrôlant que cette durée soit pas inutilement trop longue.

## Revendications

1. Procédé de contrôle d'une dépression (ΔP) d'assistance de servofrein (26), comprenant des étapes consistant à :
- faire fonctionner (32) une pompe à vide (21) pour augmenter ladite dépression (ΔP) lorsque ladite dépression (ΔP) est inférieure (31) à un seuil bas (S1) ; et
- arrêter (35) la pompe à vide (21) lorsque ladite dépression (ΔP) est supérieure (33) à un seuil haut (S2, S2v) ou lorsqu'une durée quantifiée de fonctionnement (Δt) de la pompe à vide dépasse (34, 36) un durée limite haute (tM) ;
**caractérisé en ce qu'**il comprend au moins une étape consistant à :
- diminuer (37) le seuil haut (S2v) lorsque la durée quantifiée de fonctionnement (Δt) de la pompe à vide est supérieure ou égale à la durée limite haute (tM).

2. Procédé selon la revendication 1, dans lequel le seuil haut (S2v) est diminué en soustrayant une quantité (Δs) du seuil haut (S2v), ladite quantité (Δs) étant inférieure à la différence entre seuil haut (S2v) et le seuil bas (S1).

3. Procédé selon l'une des revendications 1 ou 2, comprenant une étape consistant à :
- augmenter (39) le seuil haut (S2v) lorsque la durée quantifiée de fonctionnement (Δt) de la pompe à vide est inférieure ou égale à une durée limite basse (tC) inférieure à ladite durée limite haute (tM).

4. Procédé selon la revendication 3, dans lequel le seuil haut (S2v) est augmenté en additionnant une quantité (Δs) au seuil haut (S2v), ladite quantité (Δs) étant inférieure à la différence entre seuil haut (S2v) et le seuil bas (S1).

5. Procédé selon l'une des revendications 3 ou 4, dans lequel la durée limite basse (tC) correspond à une constante de temps de mise en dépression maximale possible accumulée dans le servofrein (26).

6. Procédé selon l'une des revendications précédentes, dans lequel la durée quantifiée de fonctionnement (Δt) de la pompe à vide est initialisée (32) à zéro lorsque la dépression (ΔP) passe en dessous du seuil bas (S1).

7. Procédé selon la revendication précédente, dans lequel la durée quantifiée de fonctionnement (Δt) de la pompe à vide est initialisée (32) à zéro lors d'un actionnement des freins.

8. Programme d'ordinateur comprenant des instructions de code de programme pour l'exécution des étapes du procédé selon l'une des revendications 1 à 7 lorsque ledit programme est exécuté sur un ordinateur.

9. Dispositif de contrôle d'une dépression (ΔP) d'assistance de servofrein (26), comprenant un capteur de dépression (29) pour mesurer ladite dépression (ΔP) et une pompe à vide (21) pour augmenter ladite dépression (ΔP) lorsque ladite dépression (ΔP) baisse, **caractérisé en ce qu'**il comprend une unité électronique (14) qui est connectée au capteur de dépression (29) et à la pompe à vide (21) et qui comporte un programme d'ordinateur pour l'exécution au moins des étapes du procédé selon l'une des revendications 1 à 7.

10. Dispositif selon la revendication 9, **caractérisé en ce qu'**il comprend un détecteur d'actionnement des freins (23, 25) et **en ce que** l'unité électronique (14) est connectée au détecteur d'actionnement des freins (23, 25).

## Patentansprüche

1. Verfahren zur Steuerung eines Hilfsunterdrucks (ΔP) eines Bremskraftverstärkers (26), welches Schritte umfasst, die in Folgendem bestehen:
- Betreiben (32) einer Vakuumpumpe (21), um den Unterdruck (ΔP) zu erhöhen, wenn der Unterdruck (ΔP) niedriger (31) als ein unterer Schwellenwert (S1) ist; und
- Anhalten (35) der Vakuumpumpe (21), wenn der Unterdruck (ΔP) höher (33) als ein oberer Schwellenwert (S2, S2v) ist oder wenn eine quantifizierte Betriebsdauer (Δt) der Vakuumpumpe eine obere Grenzdauer (tM) überschreitet (34, 36); **dadurch gekennzeichnet, dass** es wenigstens einen Schritt umfasst, der in Folgendem besteht:
- Verringern (37) des oberen Schwellenwertes (S2v), wenn die quantifizierte Betriebsdauer (Δt) der Vakuumpumpe größer als die oder gleich der oberen Grenzdauer (tM) ist.

2. Verfahren nach Anspruch 1, wobei der obere Schwellenwert (S2v) verringert wird, indem eine Größe (Δs) von dem oberen Schwellenwert (S2v) subtrahiert wird, wobei diese Größe (Δs) kleiner als die Differenz zwischen oberem Schwellenwert (S2v) und dem unteren Schwellenwert (S1) ist.

3. Verfahren nach einem der Ansprüche 1 oder 2, welches einen Schritt umfasst, der in Folgendem besteht:
- Erhöhen (39) des oberen Schwellenwertes (S2v), wenn die quantifizierte Betriebsdauer (Δt) der Vakuumpumpe kleiner als eine oder gleich einer unteren Grenzdauer (tC) ist, die niedriger als die obere Grenzdauer (tM) ist.

4. Verfahren nach Anspruch 3, wobei der obere Schwellenwert (S2v) erhöht wird, indem eine Größe (Δs) zu dem oberen Schwellenwert (S2v) addiert wird, wobei diese Größe (Δs) kleiner als die Differenz zwischen oberem Schwellenwert (S2v) und dem unteren Schwellenwert (S1) ist.

5. Verfahren nach einem der Ansprüche 3 oder 4, wobei die untere Grenzdauer (tC) einer Zeitkonstante der Herstellung eines maximal möglichen Unterdrucks im Bremskraftverstärker (26) entspricht.

6. Verfahren nach einem der vorhergehenden Ansprüche, wobei die quantifizierte Betriebsdauer (Δt) der Vakuumpumpe mit null initialisiert (32) wird, wenn der Unterdruck (ΔP) den unteren Schwellenwert (S1) unterschreitet.

7. Verfahren nach dem vorhergehenden Anspruch, wobei die quantifizierte Betriebsdauer (Δt) der Vakuumpumpe bei einer Betätigung der Bremsen mit null initialisiert (32) wird.

8. Computerprogramm, welches Programmcodeanweisungen zur Ausführung der Schritte des Verfahrens nach einem der Ansprüche 1 bis 7, wenn das Programm auf einem Computer ausgeführt wird, umfasst.

9. Vorrichtung zur Steuerung eines Hilfsunterdrucks (ΔP) eines Bremskraftverstärkers (26), welche einen Unterdrucksensor (29) zum Messen des Unterdrucks (ΔP) und eine Vakuumpumpe (21) zum Erhöhen des Unterdrucks (ΔP), wenn der Unterdruck (ΔP) abnimmt, umfasst, **dadurch gekennzeichnet, dass** sie eine Elektronikeinheit (14) umfasst, welche mit dem Unterdrucksensor (29) und mit der Vakuumpumpe (21) verbunden ist und welche ein Computerprogramm zur Ausführung wenigstens der Schritte des Verfahrens nach einem der Ansprüche 1 bis 7 umfasst.

10. Vorrichtung nach Anspruch 9, **dadurch gekennzeichnet, dass** sie einen Bremsbetätigungsdetektor (23, 25) umfasst, und dadurch, dass die Elektronikeinheit (14) mit dem Bremsbetätigungsdetektor (23, 25) verbunden ist.

## Claims

1. Method for controlling a boost vacuum (ΔP) of a vacuum brake booster (26), comprising steps consisting in:
- operating (32) a vacuum pump (21) so as to increase the said vacuum (ΔP) when the said vacuum (ΔP) is below (31) a low threshold (S1); and
- stopping (35) the vacuum pump (21) when the said vacuum (ΔP) is above (33) a high threshold (S2, S2v) or when a quantified duration of operation (Δt) of the vacuum pump exceeds (34, 36) a high limit duration (tM) ;
**characterized in that** it comprises at least one step consisting in:
- lowering (37) the high threshold (S2v) when the quantified duration of operation (Δt) of the vacuum pump is greater than or equal to the high limit duration (tM).

2. Method according to Claim 1, in which the high threshold (S2v) is lowered by subtracting a quantity (Δs) from the high threshold (S2v), the said quantity (Δs) being less than the difference between the high threshold (S2v) and the low threshold (S1).

3. Method according to either of Claims 1 and 2, comprising a step consisting in:
- raising (39) the high threshold (S2v) when the quantified duration of operation (Δt) of the vacuum pump is less than or equal to a low limit duration (tC) less than the said high limit duration (tM).

4. Method according to Claim 3, in which the high threshold (S2v) is raised by adding a quantity (Δs) to the high threshold (S2v), the said quantity (Δs) being less than the difference between the high threshold (S2v) and the low threshold (S1).

5. Method according to one of Claims 3 and 4, in which the low limit duration (tC) corresponds to a time constant for the accumulated maximum possible brake booster (26) vacuum.

6. Method according to one of the preceding claims, in which the quantified duration of operation (Δt) of the vacuum pump is set (32) to zero when the vacuum (Δt) drops below the low threshold (S1).

7. Method according to the preceding claim, in which the quantified duration of operation (Δt) of the vacuum pump is set (32) to zero upon actuation of the brakes.

8. Computer program comprising programming code instructions for executing steps of the method according to one of claims 1 to 7 when the said program is run on a computer.

9. Device for controlling a boost vacuum (ΔP) of a vacuum brake booster (26), comprising a vacuum sensor (29) for measuring the said vacuum (ΔP) and a vacuum pump (21) for increasing the said vacuum (ΔP) when the said vacuum (ΔP) drops, **characterized in that** it comprises an electronic unit (14) which is connected to the vacuum sensor (29) and to the vacuum pump (21) and which comprises a computer program for executing at least steps of the method according to one of Claims 1 to 7.

10. Device according to Claim 9, **characterized in that** it comprises a detector of activation of the brakes (23, 25) and **in that** the electronic unit (14) is connected to the detector of actuation of the brakes (23, 25).
